# EUROPEAN PATENT SPECIFICATION

(11) **EP 2 739 979 B1**
(45) Date of publication and mention of the grant of the patent: **16.01.2019**
(21) Application number: 12820537.4
(22) Date of filing: 20.07.2012
(51) Int. Cl.: G01N 35/10, G01N 35/08, G01N 15/02

(54) **DETECTION OF A COMPROMISED FLOW LINE IN A LABORATORY INSTRUMENT**
NACHWEIS EINER BEEINTRÄCHTIGTEN DURCHFLUSSLEITUNG IN EINEM LABORINSTRUMENT
DÉTECTION D'UNE CONDUITE D'ÉCOULEMENT COMPROMISE DANS UN APPAREIL DE LABORATOIRE

(30) Priority: 03.08.2011 US 201161514668 P
(43) Date of publication of application: 11.06.2014
(73) Proprietor: Becton, Dickinson and Company, Franklin Lakes, NJ 07417-1880 (US)
(72) Inventor: SUBRAMANIAN, Amirthaganesh, San Jose, California 95131 (US); SUGARMAN, Jeffrey, Los Altos, California 94024 (US); HUANG, Chiming Frank, San Jose, California 95132 (US)
(74) Representative: Luten, Martin Haaije
(86) International application number: PCT/US2012/047738
(87) International publication number: WO 2013/019437

(56) References cited:
- WO-A1-2011/048793
- WO-A1-2011/090978
- US-A- 5 408 891
- US-A1- 2002 192 113
- US-A1- 2005 074 361
- US-A1- 2006 006 170
- US-A1- 2008 154 543
- US-A1- 2009 038 696
- US-A1- 2009 041 628
- US-A1- 2009 068 062
- US-A1- 2009 133 512
- US-A1- 2009 288 494
- US-A1- 2010 037 921
- US-B1- 6 434 783

## Description

### INTRODUCTION

The present invention relates to laboratory instruments such as flow cytometers. More specifically, the present invention relates to systems and methods for detecting whether a fluid line in a laboratory instrument is clogged.

Flow cytometers, for example, are valuable laboratory instruments for the analysis and isolation of biological particles, such as cells and constituent molecules. Flow cytometers utilize a fluid stream to linearly segregate particles such that they can pass, single file, through a detection apparatus measuring light scattering and/or fluorescence. Individual cells can then be characterized according to their scattering and the presence of detectable markers. Thus, a flow cytometer can be used to produce a diagnostic profile of a population of biological particles.

The preparation of samples for flow cytometry can require accurate dispensing of biological specimens and reagents. In such cases, detecting problems with a dispensing system used in conjunction with flow cytometry is key to preventing the detection system from providing inaccurate results. In addition, the accurate delivery of sample fluid into a flow cytometer detector may rely on an unobstructed flow through a probe and transfer line.

In these ways, processing of fluid and/or samples through the instrument's flow lines (for sample preparation, sample acquisition, and cleaning) requires uncompromised passageways. For example, one probe is generally used for sample preparation, while another is used for transfer of sample for analysis. Clogs or occlusions in the probes may be created by protein build-up or drying of blood within the probe when the instrument suffers a power failure during the sample preparation process; by particles lodged in the flow line; failure of liquid filters; misconnected fittings; failed valves and/or pumps; etc.

US2009/068062A1 discloses a system and method of the simultaneous detection of multiple analytes in a sample. The said system is particularly a flow cytometer comprising sample probes. As stated in paragraph [0195], a sample blockage detection is present, which includes a pressure sensor that monitors pressure variations that occur during aspirating or dispensing samples. As specified in paragraph [0196] and beyond, the system further includes a wash or cleaning station for cleaning the sample probes. A fluid line is coupled to the wash station to withdraw fluid from the wash station and deliver the fluid to the waste tank. Use is made of a waste pump, coupled to the fluid line. US2008/154543 furthermore discloses a system for removing liquid waste from an automated diagnostic instrument, wherein the liquid waste is moved from the instrument to a waste tank by means of a pressure differential created by a vacuum pump and a peristaltic pump.

### SUMMARY

The system according to Claim 1 and the method according to claim 13 are used to detect a clog in an upstream fluid line including a sample probe in a laboratory instrument. In one embodiment, for example, the system and method presented are used to detect a clog in a probe used for sample preparation and delivery in a flow cytometer.

Probes are typically rinsed or washed by forcing liquid through the probe via a pump or a pressure source. The rinsing action typically occurs at a wash station. The liquid from the wash station is then convected to a waste tank via a liquid pump (e.g., a waste pump). According to the invention, a vacuum transducer is connected at the suction side of the pump, and the transducer monitors the vacuum level (or pressure trace) at the inlet side of the pump. The pressure trace measured by the vacuum transducer will differ depending on whether the waste pump is pulling air or liquid. When the probe is completely clogged, no liquid will flow through the probe and into the wash station, and as such the waste pump will be pulling air exclusively. In this way, the vacuum transducer can detect a change in the pressure trace resulting from a clog upstream in the probe. In other words, when air alone is aspirated by the waste pump, the level of vacuum is lower compared to the case when liquid is being aspirated. The system thus monitors the change in vacuum level during the period when rinsing takes place, and determines if the probe is clogged or clog-free.

The system and method of the invention may further be used to monitor the health of the waste pump, and to ensure positive connectivity between the waste pump and the waste collection tank. Also, the vacuum level may be used to detect the complete or gradual failure of the waste pump.

Additional advantages and embodiments are provided below.

### BRIEF DESCRIPTION OF THE FIGURES

The accompanying drawings, which are incorporated herein, form part of the specification. Together with this written description, the drawings further serve to explain the principles of, and to enable a person skilled in the relevant art(s), to make and use systems and methods in accordance with the present invention.
FIG. 1 is a schematic representation of a system in accordance with one embodiment.
FIG. 2 is a typical pressure trace when the waste pump is aspirating only air.
FIG. 3 is a typical pressure trace when the waste pump is aspirating an air-liquid mixture.
FIG. 4 is a perspective view of a wash station in accordance with one embodiment presented.

### DETAILED DESCRIPTION

The systems and methods described herein are used to detect a cloggedflow line in a laboratory instrument.

In one embodiment, for example, the system and method of the invention are used to detect a clog in the probe used for sample preparation and delivery in a flow cytometer. According to the invention, the system presented include a vacuum transducer connected at the suction side of a waste pump. The vacuum transducer monitors the vacuum level (or pressure trace) at the inlet side of the pump. The pressure trace measured by the vacuum transducer will differ depending on whether the waste pump is pulling air or liquid from a wash station. When the probe is clogged, no liquid will flow through the probe and into the wash station, and as such the waste pump will be pulling air. The vacuum transducer can then detect a change in the pressure trace, indicating a clog upstream in the probe. In other words, when air alone is aspirated by the waste pump, the level of vacuum is lower compared to the case when liquid is being aspirated. The system thus monitors the change in vacuum level during the period when rinsing takes place, and determines if the probe is clogged or clog-free.

It is noted that, as used herein, to "detect" a clogged flow line, or to "determine whether the flow line is clogged," does not require an absolute determination of a clogged flow line. However, the system and method of the invention allow a user to improve the probabilities of identifying a problem in the laboratory instrument.

The system and method of the invention may also be used to monitor the health of the waste pump, and to ensure positive connectivity between the waste pump and the waste collection tank. The vacuum level (e.g., very low values) can also be used to detect the complete or gradual failure of the waste pump (for both diaphragm or peristaltic pumps). As such, there is a reduced need for providing visual access and inspection to such components. Also, the present invention removes the need for a pressure sensor on the probe itself, which is inconvenient and adds complexity to the flow line.

The following detailed description of the figures refers to the accompanying drawings that illustrate an exemplary embodiment of the system and method for detecting a compromised flow line in a laboratory instrument according to the invention. Other embodiments are possible. Modifications may be made to the embodiment described herein without departing from the scope of the present invention as claimed in the claims. Therefore, the following detailed description is not meant to be limiting.

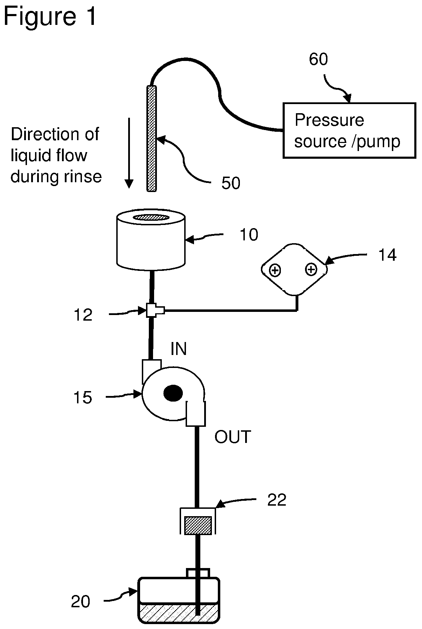

FIG. 1 is a schematic representation of a system in accordance with one embodiment of the invention. As shown, a sample probe 50 is presented to a wash station 10. Sample probe 50 is generally a probe used for the collection, preparation, and distribution of fluids, as would be understood to one of skill in the art, in a laboratory instrument. Sample probe 50 may remain completely outside of wash station 10, or may alternatively be partially or fully inserted into wash station 10. Sample probe 50, however, is in fluid communication with (i.e., capable of delivering fluid to) wash station 10, such that pressure source/pump 60 pushes liquid flow through probe 50 during a rinse/wash cycle. As such, fluid within probe 50 is delivered to wash station 10.

A fluid conduit is then provided between wash station 10 and the input (or suction) side of a waste pump 15. In one embodiment, waste pump is a dual-head, diaphragm type liquid pump available from KNF Neuberger, Inc, Model NFT30. A vacuum transducer 14 is coupled to the fluid conduit at fitting 12. Vacuum transducer 14 is provided to monitor the vacuum pressure within the fluid conduit. More specifically, vacuum transducer 14 evaluates a pressure trace within the fluid conduit to determine whether wash station 10 is receiving fluid from probe 50. If fluid is expected from probe 50, but is not received from the probe, then the system can alert a user that the probe (or system in general) is compromised (e.g., there may be a clog in probe 50). A timing synchronization circuit (not shown) may be coupled to vacuum transducer 14 in order to identify when fluid is expected in wash station 10. Further, an external processor (not shown) may be coupled to vacuum transducer 14 in order to evaluate the vacuum pressure trace measured by the vacuum transducer. In one embodiment, an STR912 32-bit ARM based microprocessor from STMicroelectronics is used to monitor the vacuum pressure from the transducer device. An ADC device is embedded in the microprocessor to interface with the transducer device. However, any microprocessor that provides interface to communicate with the transducer device shall work.

In one embodiment, vacuum transducer 14 is a printed circuit board (PCB) -mounted SenSym ICT, available from Honeywell™, Model SDX15G2 0-15PSI 20VDC DIP-6. Though this sensor is a pressure sensor, the vacuum or negative pressure is read by reversing the polarity between the sensor and the amplifier. For improved resolution a sensor in the range 0-5 psi may be used. By suitable choice of the sensor with finer resolution, even a partial clog in probe 50 may be identified. In applications where there is a large range in vacuum levels, two or more sensors may be used in parallel to improve the resolution of vacuum tracking.

Waste pump 15 may be a diaphragm liquid pump or a peristaltic pump. Tubing from the output side of waste pump 15 is in fluid communication with tubing from the waste tank 20, via quick-disconnect fitting 22 with shut-off valves (e.g., Colder™ fittings). In the event the user fails to properly connect waste tank 20 to the flow line (e.g., at fitting 22) the vacuum level measured at transducer 14 will reach very low values as waste pump 15 will be "dead-headed."

The system presented in FIG. 1 therefore provides a method for detecting various failures related to a flow line, such as a clog or leak in the upstream line, failure of the upstream pump, clogging of the sample probe itself, or downstream clogging or blockage of the waste path. Each of these can be detected by measuring a vacuum pressure downstream of the wash station that is intended to receive fluid from the probe. The clog detection technique presented is based on the difference in the level of vacuum when the pump is aspirating air or air/liquid mixture (i.e., an evaluation of the pressure trace identified in the fluid lines). In other words, monitoring the vacuum at the indicated position in FIG. 1 allows the detection of fluid flow past that point.

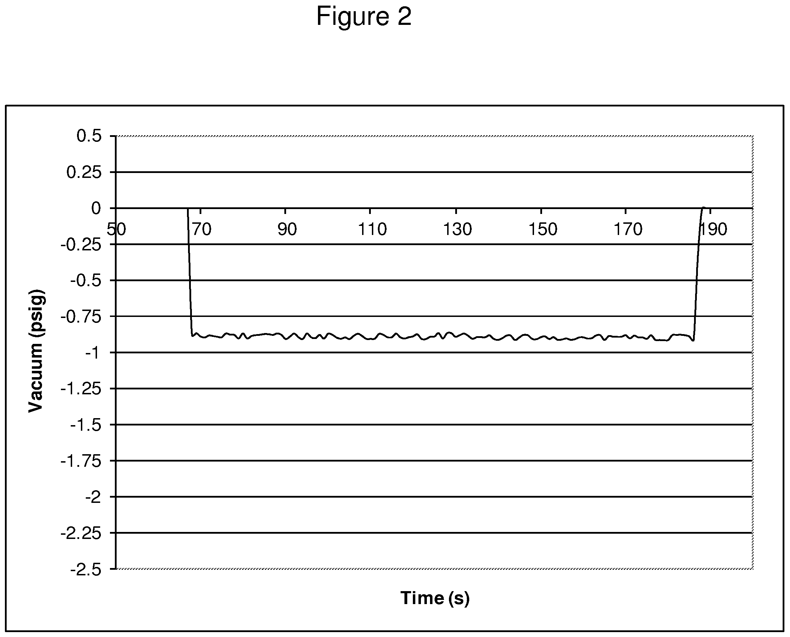

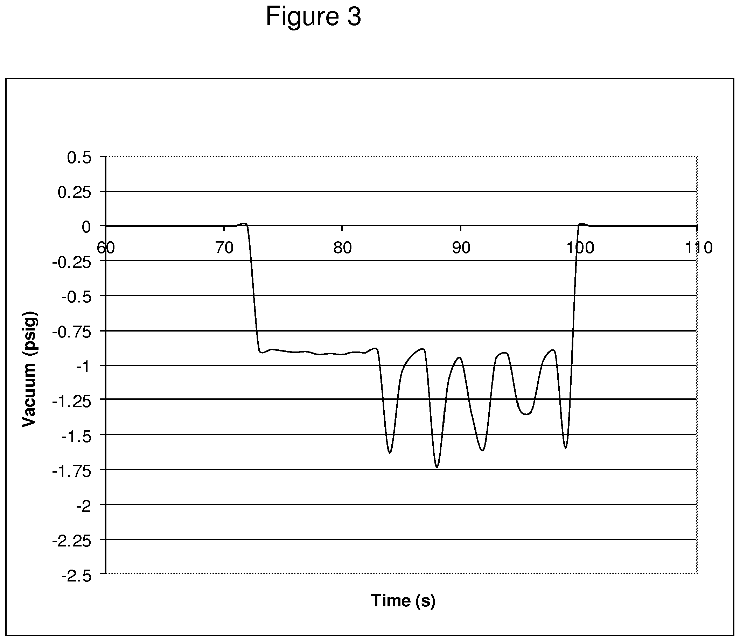

FIG. 2 is a typical pressure trace when the waste pump is aspirating only air. The vacuum level when air alone is aspirated is at -0.9 psig. FIG. 3 is a typical pressure trace when the waste pump is aspirating an air-liquid mixture (i.e., liquid is being pushed through an un- clogged probe via a syringe pump). The average peak vacuum level when air/liquid mixture is aspirated is about - 1.5 psig. The vacuum level is higher when the liquid/air mixture is aspirated by the waste pump relative to the condition when air alone is aspirated.

To avoid spurious vacuum readings in the detection of a clog or pump failure, an averaging procedure may be used instead of relying on just one reading. For example, the vacuum value may be tested every 250 milliseconds for the entire duration of a rinse cycle, or portion of the cycle (depending on the pressure trace). In the pressure trace shown in FIG. 3, for the first 11 seconds, only air is being drawn by the waste pump, and the liquid/air mixture is getting aspirated for the remaining 17 seconds. The recorded values can be used to identify the peak values and obtain an average. The average value obtained from the rinse cycle may then be used to compare against the average value obtained for the air only aspiration case.

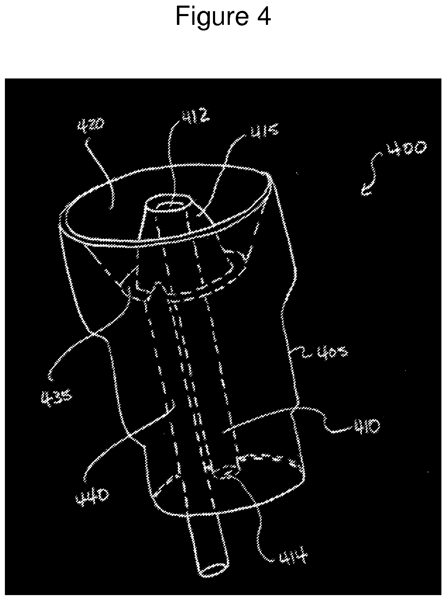

FIG. 4 is a perspective view of a wash station 400, in accordance with one embodiment presented. Wash station 400 includes a perimeter wall 405 and a central cavity 410. Central cavity 410 is designed for receiving at least a portion of a sample probe. Specifically, the sample probe is inserted through open end 412. When fluid is pushed out of the sample probe, and against closed end 414 of central cavity 410, the fluid overflows into an annular recess 435 formed between inner walls 415, 420. An output drain 440 is formed in annular recess 435 to withdraw overflow-fluid from the annular recess. For example, output drain 440 may be coupled to a waste pump 15 for drawing fluid from wash station 400 to waste tank 20. While wash station 400 is shown in a circular configuration, other shapes, sizes, and designs may be employed. Alternative wash stations include wash stations typically used for the disposal of sample or excess fluid, in laboratory instruments, as would be understood to one of skill in the art.

### Additional Embodiments

According to the invention, there is provided a system for detecting a clogged flow line in a laboratory instrument as claimed in claim 1, the system comprising: (1) a wash station in fluid communication with a sample probe; (2) a fluid line coupled to the wash station to withdraw fluid from the wash station and deliver the fluid to a waste tank; and (3) a vacuum transducer, coupled to the fluid line, to measure vacuum pressure per unit time within the fluid line. The system further comprises: (4) a processor, coupled to the vacuum transducer, to evaluate a vacuum pressure trace measured by the vacuum transducer, and (5) a waste pump, coupled to the fluid line between the vacuum transducer and the waste tank, to create a vacuum on the wash station.

The system may further comprise (6) a timing synchronization circuit to identify when fluid is expected in the wash station;; and/or (7) a disconnect-fitting along the fluid line to disconnect the waste tank form the fluid line.

In still another embodiment, the wash station includes a central cavity for receiving at least a portion of the sample probe. The central cavity has (i) a cavity wall, (ii) a closed end, and (iii) an open end. The wash station further includes an annular recess surrounding the open end of the central cavity, wherein fluid being dispensed from the sample probe into the central cavity overflows into the annular recess. The wash station also includes an output drain formed in the annular recess. Herein, the fluid line is coupled to the output drain of the wash station to withdraw fluid from the annular recess and deliver the fluid to a waste tank.

In yet another embodiment, the wash station includes: (1) a perimeter wall; (2) a central cavity for receiving at least a portion of a sample probe, the central cavity having (i) a cavity wall, (ii) a closed end, and (iii) an open end; (3) an annular recess surrounding the open end of the central cavity, wherein fluid being dispensed from the sample probe into the central cavity overflows into the annular recess; and (4) an output drain formed in the annular recess.

According to another aspect, the invention relates to a method for detecting a clogged flow line in a laboratory instrument as claimed in claim 13, the method comprising: (1) measuring a vacuum pressure per unit time within a fluid line with a vacuum transducer that is coupled to the fluid line between a wash station and a waste tank; and (2) determining whether the flow line of the laboratory instrument is compromised based on the vacuum pressure per unit time.

In one embodiment, the method is detecting a clog in a flow line of a laboratory instrument, wherein the clog is upstream of a sample probe, the method comprising: (1) creating a vacuum at a wash station by use of a waste pump coupled to a fluid line, wherein the wash station is in fluid communication with a sample probe; and (2) measuring a vacuum pressure per unit time within the fluid line with a vacuum transducer that is coupled to the fluid line between a wash station and a waste tank, wherein variability in the vacuum pressure per unit time provides an indication of a clog in the flow line of the laboratory instrument, upstream of the sample probe. The method may further comprise: (3) coupling a vacuum transducer to a vacuum-side of the waste pump to measure the vacuum pressure per unit time within the fluid line; and/or (4) coupling a transducer to the pressure-side of the waste pump to measure the vacuum pressure per unit time within the fluid line.

### Conclusion

The foregoing description of the invention has been presented for purposes of illustration and description. It is not intended to be exhaustive or to limit the invention to the precise form disclosed. Other modifications and variations may be possible within the scope of the claims. The embodiments were chosen and described in order to best explain the principles of the invention and its practical application, and to thereby enable others skilled in the art to best utilize the invention in various embodiments and various modifications as are suited to the particular use contemplated.

Unless defined otherwise, all technical and scientific terms used herein have the same meaning as commonly understood by one of ordinary skill in the art to which this invention belongs.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

It is appreciated that certain features of the invention, which are, for clarity, described in the context of separate embodiments, may also be provided in combination in a single embodiment.

## Claims

1. A system for determining whether an upstream fluid line including a sample probe (50) in a laboratory instrument is clogged, the system comprising:
a wash station (10) in fluid communication with the sample probe (50);
a waste tank (20);
a fluid line coupled to the wash station (10) to withdraw fluid from the wash station (10) and deliver the fluid to the waste tank (20);
a waste pump (15), coupled to the fluid line to create, on its suction side, a vacuum on the wash station (10);
a vacuum transducer (14), and
a processor, coupled to the vacuum transducer (14), to evaluate a vacuum pressure trace measured by the vacuum transducer (14),
**characterized in that** the vacuum transducer is connected to the fluid line at the suction side of the waste pump (15), to measure vacuum pressure per unit time within the fluid line, and that the processor is configured to detect a state of clogging in the upstream fluid line on the basis of said measured vacuum pressure per unit time.

2. The system as claimed in claim 1, wherein the processor is further configured to detect a state of clogging in the upstream fluid line and to detect complete or gradual failure of the waste pump on the basis of said measured vacuum pressure per unit time.

3. The system of claim 1, further comprising:
a timing synchronization circuit to identify when fluid is expected in the wash station (10).

4. The system of claim 1-3, wherein the vacuum transducer is configured to measure a plurality of vacuum traces within a unit of time and the processor is configured to apply averaging of said plurality of measurements to identify an average peak vacuum level.

5. The system as claimed in claim 4, wherein the processor is configured to compare a determined average peak value against an average peak value obtained under a condition when air alone is aspirated.

6. The system as claimed in any of the preceding claims, wherein the vacuum transducer (14) is embodied as a pressure sensor coupled to an amplifier, wherein the vacuum or negative pressure is read by reversing the polarity between the pressure sensor and the amplifier.

7. The system as claimed in Claim 6, wherein two or more pressure sensors are used in parallel.

8. The system of claim 1, further comprising:
a disconnect-fitting (22) along the fluid line to disconnect the waste tank (20) from the fluid line.

9. The_system according to any of Claims 1 to 8, the wash station (10, 400) having
a central cavity (410) for receiving at least a portion of the sample probe (50), the central cavity (410) having (i) a cavity wall (405), (ii) a closed end (414), and (iii) an open end (412),
an annular recess (435) surrounding the open end (412) of the central cavity (410), wherein fluid being dispensed from the sample probe (50) into the central cavity (410) overflows into the annular recess (435), and
an output drain (440) formed in the annular recess (435); and
the fluid line is coupled to the output drain (440) of the wash station (400) to withdraw fluid from the annular recess (435) and deliver the fluid to a waste tank (20).

10. The system according to any of Claims 1 to 9, wherein the instrument is a flow cytometer.

11. The system according to any of Claims 1 to 10, wherein the sample probe (50) is configured to be freely movable between positions completely outside of the wash station (10), partially inserted in the wash station (10), and fully inserted in the wash station (10).

12. A flow cytometer comprising the system as claimed in any of the preceding claims.

13. A method for detecting a clog in an upstream clogged fluid line in a laboratory instrument, using the system as claimed in any of the preceding claims 1-11, the method comprising:
creating a vacuum at the wash station (10) by use of a waste pump (15) coupled to a fluid line, wherein the wash station (10) is in fluid communication with a sample probe (50);
measuring a vacuum pressure per unit time within the fluid line with the vacuum transducer (14) that is coupled to the fluid line to a suction side of the waste pump (15) between a wash station (10) and a waste tank (20); and
determining whether the fluid line of the laboratory instrument is clogged based on the vacuum pressure per unit time.

14. The method of claim 13, wherein variability in the vacuum pressure per unit time provides an indication of a clog in the upstream fluid line of the laboratory instrument, upstream of the sample probe (50).

## Patentansprüche

1. System zum Bestimmen, ob eine Aufstrom-Fluidleitung mit einer Meßsonde (50) in einem Laborinstrument verstopft ist, wobei das System aufweist:
eine Waschstation (10), die in fluidmäßiger Kommunikation mit der Meßsonde (50) ist;
einen Abwassertank (20);
eine Fluidleitung, die mit der Waschstation (10) gekoppelt ist, um Fluid aus der Waschstation (10) abzuziehen und das Fluid an den Abwassertank (20) abzugeben;
eine Abwasserpumpe (15), die mit der Fluidleitung gekoppelt ist, um an ihrer Ansaugseite ein Vakuum an der Waschstation (10) zu erzeugen;
einen Unterdruck-Umformer (14), und
einen Prozessor, der mit dem Unterdruck-Umformer (14) gekoppelt ist, um eine Vakuumdruck-Verlaufskurve zu evaluieren, die von dem Unterdruck-Umformer gemessen wurde, **dadurch gekennzeichnet, dass** der Unterdruck-Umformer mit der Fluidleitung an der Ansaugseite der Abwasserpumpe (15) verbunden ist, um einen Vakuumdruck pro Zeiteinheit innerhalb der Fluidleitung zu messen und dass der Prozessor ausgestaltet ist, um einen Zustand des Verstopfens in der Aufstrom-Fluidleitung basierend auf dem gemessenen Vakuumdruck pro Zeiteinheit zu erfassen.

2. System nach Anspruch 1, wobei der Prozessor ferner ausgestaltet ist zum Erfassen eines Zustands des Verstopfens in der Aufstrom-Fluidleitung und zum Erfassen des vollständigen oder allmählichen Ausfalls der Abwasserpumpe basierend auf dem gemessenen Vakuumdruck pro Zeiteinheit.

3. System nach Anspruch 1, ferner aufweisend:
eine Timing-Synchronisierschaltung zum Identifizieren, wann Fluid in der Waschstation (10) erwartet wird.

4. System nach Anspruch 1 - 3, wobei der Unterdruck-Umformer ausgestaltet ist, um mehrere Vakuumverlaufs-Kurven innerhalb einer Zeiteinheit zu messen und der Prozessor ausgestaltet ist, um eine Mittelung der mehreren Messungen anzuwenden, um einen mittleren Spitzenwert des Vakuums zu identifizieren.

5. System nach Anspruch 4, wobei der Prozessor ausgestaltet ist, um einen vorbestimmten mittleren Spitzenwert mit einem mittleren Spitzenwert zu vergleichen, der in einem Zustand erhalten wurde, bei dem nur Luft angesaugt wurde.

6. System nach einem der vorstehenden Ansprüche, wobei der Unterdruck-Umformer (14) ausgestaltet ist als Drucksensor, der mit einem Verstärker gekoppelt ist, wobei das Vakuum oder der Unterdruck gelesen wird durch Umkehren der Polarität zwischen dem Drucksensor und dem Verstärker.

7. System nach Anspruch 6, wobei zwei oder mehr Drucksensoren parallel verwendet werden.

8. System nach Anspruch 1, ferner aufweisend:
ein Trenn-Fitting (22) entlang der Fluidleitung zum Trennen des Abwassertanks (20) von der Fluidleitung.

9. System nach einem der Ansprüche 1-8, wobei die Waschstation (10, 400) einen
zentralen Hohlraum (410) hat zur Aufnahme wenigstens eines Abschnitts der Meßsonde (50), wobei der zentrale Hohlraum (410)(i) eine Hohlraumwand (405), (ii) ein geschlossenes Ende (414) und (iii) ein offenes Ende (412) aufweist,
eine ringförmige Ausnehmung (435) hat, welche das offene Ende (412) des zentralen Hohlraums (410) umgibt, wobei Fluid, das von der Meßsonde (50) in den zentralen Hohlraum (410) abgegeben wurde, sich in die ringförmige Ausnehmung (4345) übergießt und
einen Abfluss (440) hat, der in der ringförmigen Ausnehmung (435) ausgebildet ist; und
die Fluidleitung mit dem Abfluss (440) der Waschstation (400) gekoppelt ist, um Fluid aus der ringförmigen Ausnehmung (435) abzuziehen und das Fluid an einen Abwassertank (20) abzugeben.

10. System nach einem der Ansprüche 1 bis 9, wobei das Instrument ein Strömungscytometer ist.

11. System nach einem der Ansprüche 1 bis 10, wobei die Meßsonde (50) ausgestaltet ist, um frei bewegbar zu sein zwischen Position vollständig außerhalb der Waschstation (10), teil-weise in die Waschstation (10) eingeführt und vollständig in die Waschstation (10) eingeführt.

12. Strömungscytometer, umfassend das System nach einem der vorstehenden Ansprüche.

13. Verfahren zum Erfassen einer Verstopfung in einer aufstromseitig verstopften Fluidleitung in einem Laborinstrument unter Verwendung des Systems nach einem der vorstehenden Ansprüche 1 - 11, wobei das Verfahren aufweist:
Erzeugen eines Vakuums an der Waschstation 810) durch Verwendung einer Abwasserpumpe (15), die mit einer Fluidleitung gekoppelt ist, wobei die Waschstation (10) sich in fluidmäßiger Kommunikation mit einer Meßsonde (50) befindet:
Messen eines Vakuumdrucks pro Zeiteinheit innerhalb der Fluidleitung mit dem Unterdruck-Umformer (14), der mit der Fluidleitung an einer Ansaugseite der Abwasserpumpe (15) zwischen einer Waschstation (10) und einem Abwassertank (10) gekoppelt ist; und
Bestimmen basierend auf dem Vakuumdruck pro Zeiteinheit, ob die Fluidleitung des Laborinstruments verstopft ist.

14. Verfahren nach Anspruch 13, wobei eine Variabilität des Vakuumdrucks ein Anzeichen für eine Verstopfung in der stromaufwärts liegenden Fluidleitung des Laborinstruments stromaufwärts der Meßsonde (50) liefert.

## Revendications

1. Système permettant de déterminer si une conduite d'écoulement d'amont incluant une sonde à échantillon (50) dans un appareil de laboratoire est obstruée, le système comprenant :
un poste de lavage (10) en communication fluidique avec la sonde à échantillon (50) ;
un réservoir d'eaux usées (20) ;
une conduite d'écoulement couplée au poste de lavage (10) pour retirer le fluide du poste de lavage (10) et fournir le fluide au réservoir d'eaux usées (20) ;
une pompe à eaux usées (15), couplée à la conduite d'écoulement pour créer, sur son côté aspiration, un vide sur le poste de lavage (10) ;
un transducteur de vide (14), et
un processeur, couplé au transducteur de vide (14), pour évaluer une trace de pression à vide mesurée par le transducteur de vide (14),
**caractérisé en ce que** le transducteur de vide est connecté à la conduite d'écoulement du côté aspiration de la pompe à eaux usées (15), pour mesurer la pression à vide par unité de temps à l'intérieur de la conduite d'écoulement, et **en ce que** le processeur est configuré pour détecter un état d'obstruction dans la conduite d'écoulement d'amont sur la base de ladite pression à vide mesurée par unité de temps.

2. Système selon la revendication 1, dans lequel le processeur est en outre configuré pour détecter un état d'obstruction dans la conduite d'écoulement d'amont et pour détecter une défaillance totale ou graduelle de la pompe à eaux usées sur la base de ladite pression à vide mesurée par unité de temps.

3. Système selon la revendication 1, comprenant en outre :
un circuit de synchronisation temporelle pour identifier quand le fluide est attendu dans le poste de lavage (10).

4. Système selon la revendication 1 à 3, dans lequel le transducteur de vide est configuré pour mesurer une pluralité de traces de vide dans une unité de temps et le processeur est configuré pour appliquer une formation de moyennes de ladite pluralité de mesures pour identifier un niveau de vide maximal moyen.

5. Système selon la revendication 4, dans lequel le processeur est configuré pour comparer une valeur maximale moyenne déterminée à une valeur maximale moyenne obtenue dans une condition dans laquelle seul de l'air est aspiré.

6. Système selon l'une quelconque des revendications précédentes, dans lequel le transducteur de vide (14) est réalisé comme un capteur de pression couplé à un amplificateur, dans lequel la pression à vide ou négative est lue en inversant la polarité entre le capteur de pression et l'amplificateur.

7. Système selon la revendication 6, dans lequel deux capteurs de pression ou plus sont utilisés en parallèle.

8. Système selon la revendication 1, comprenant en outre :
un raccord découplable (22) le long de la conduite d'écoulement pour découpler le réservoir d'eaux usées (20) de la conduite d'écoulement.

9. Système selon l'une quelconque des revendications 1 à 8, le poste de lavage (10, 400) ayant
une cavité centrale (410) permettant de recevoir au moins une partie de la sonde à échantillon (50), la cavité centrale (410) ayant (i) une paroi de cavité (405), (ii) une extrémité fermée (414), et (iii) une extrémité ouverte (412),
un creux annulaire (435) entourant l'extrémité ouverte (412) de la cavité centrale (410), dans lequel le fluide étant dispensé par la sonde à fluide (50) dans la cavité centrale (410) déborde dans le creux annulaire (435), et
une évacuation de sortie (440) formée dans le creux annulaire (435) ; et
la conduite d'écoulement est couplée à l'évacuation de sortie (440) du poste de lavage (400) pour retirer du fluide du creux annulaire (435) et fournir le fluide à un réservoir d'eaux usées (20).

10. Système selon l'une quelconque des revendications 1 à 9, dans lequel l'appareil est un cytomètre à flux.

11. Système selon l'une quelconque des revendications 1 à 10, dans lequel la sonde à échantillon (50) est configurée pour être mobile librement entre des positions totalement hors du poste de lavage (10), partiellement insérées dans le poste de lavage (10), et entièrement insérées dans le poste de lavage (10).

12. Cytomètre à flux comprenant le système selon l'une quelconque des revendications précédentes.

13. Procédé permettant de détecter une obstruction dans une conduite d'écoulement obstruée d'amont dans un appareil de laboratoire, en utilisant le système selon l'une quelconque des revendications 1 à 11 précédentes, le procédé comprenant :
la création d'un vide au poste de lavage (10) par l'utilisation d'une pompe à eaux usées (15) couplée à une conduite d'écoulement, dans lequel le poste de lavage (10) est en communication fluidique avec une sonde à vide (50) ;
la mesure d'une pression à vide par unité de temps à l'intérieur de la conduite d'écoulement avec le transducteur de vide (14) qui est couplé à la conduite d'écoulement d'un côté aspiration de la pompe à eaux usées (15) entre un poste de lavage (10) et un réservoir d'eaux usées (20) ; et
le fait de déterminer si la conduite d'écoulement de l'appareil de laboratoire est obstruée sur la base de la pression à vide par unité de temps.

14. Procédé selon la revendication 13, dans lequel la variabilité de la pression à vide par unité de temps fournit une indication d'une obstruction dans la conduite d'écoulement d'amont de l'appareil de laboratoire, en amont de la sonde à échantillon (50).
